**Europäisches Patentamt**

**European Patent Office**

**Office européen des brevets**

(11) Veröffentlichungsnummer: **0 191 350** A2

# (12) EUROPÄISCHE PATENTANMELDUNG

(21) Anmeldenummer: 86101073.4

(22) Anmeldetag: 28.01.86

(51) Int. Cl.⁴: **B 22 D 46/00**, B 22 D 25/00

(30) Priorität: 15.02.85 DE 3505346

(43) Veröffentlichungstag der Anmeldung: 20.08.86
Patentblatt 86/34

(84) Benannte Vertragsstaaten: DE FR GB IT

(71) Anmelder: BEGO Bremer Goldschlägerei Wilh. Herbst
GmbH & Co., Emil-Sommer-Strasse 7,
D-2800 Bremen 41 (DE)

(72) Erfinder: Gundlach, Hans-Werner, Dr., Bordenauer
Strasse 6, D-2800 Bremen 1 (DE)
Erfinder: Jacob, Friedrich, Fischerteich 1,
D-2804 Lilienthal (DE)

(74) Vertreter: Bolte, Erich, Dipl.-Ing. et al, Hollerallee 73,
D-2800 Bremen (DE)

(54) Verfahren zur Steuerung des Schmelz- und Giessvorganges der Feingiesstechnik, insbesondere der Dentaltechnik, und Vorrichtung zur Durchführung des Verfahrens.

(57) Beim Erwärmen eines Schmelzgutes der Dentaltechnik wird der zeitliche Verlauf der Temperatur ausgewertet. Ändert sich die Steilheit $(d\vartheta/dt)$ der Temperaturkurve um ein vorgegebenes Maß, so wird hierdurch der Liquiduspunkt erfaßt. Zeitpunkt und/oder Temperatur zum Gießen der Schmelze werden durch ein auf den so bestimmten Liquiduspunkt bezogenes Kriterium $(\Delta\vartheta; \Delta t)$ bestimmt. Die Bestimmungswerte des Gießzeitpunktes und weitere Gießparameter werden gespeichert und bei nachfolgenden Schmelz- und Gießvorgängen als Steuergröße verwendet. Auch können die gesamten Temperaturverläufe aufeinanderfolgender Vorgänge gespeichert werden. Ein nachfolgend gemessener Temperaturverlauf wird während der Messung (abschnittsweise) mit den gespeicherten Temperaturverläufen verglichen. Bei Übereinstimmung (innerhalb vorgegebener Toleranzen) wird ein identifizierter, gespeicherter Temperaturverlauf als Soll-Verlauf für den weiteren Schmelz- und Gießvorgang verwendet.

# MEISSNER & BOLTE  0191350

PATENTANWÄLTE
EUROPEAN PATENT ATTORNEYS
BREMEN · MÜNCHEN*

— 1 —

MEISSNER & BOLTE, Hollerallee 73, D-2800 Bremen 1

Hans Meissner · Dipl.-Ing. (bis 1980)
Erich Bolte · Dipl.-Ing.
Dr. Eugen Popp · Dipl.-Wirtsch.-Ing.*
Wolf E. Sajda · Dipl.-Phys.*
Dr. Ulrich Hrabal · Dipl.-Chem.*

BÜRO/OFFICE BREMEN
Hollerallee 73
D-2800 Bremen 1

Telefon: (04 21) 34 20 19
Telex: 246 157 meibo d
Telefax: (04 21) 34 22 96

**Anmelder:**

BEGO Bremer Goldschlägerei
Wilh. Herbst GmbH & Co.
Emil-Sommer-Str. 7

2800 Bremen 41

| Ihr Zeichen<br>Your ref. | Unser Zeichen<br>Our ref. | BEG-116-EP<br>Bitte angeben/please quote | Datum<br>Date | 24. Januar 1986 |
|---|---|---|---|---|

Verfahren zur Steuerung des Schmelz-und Gießvorganges
der Feingießtechnik, insbesondere der Dentaltechnik,
und Vorrichtung zur Durchführung des Verfahrens

----------------------------------------------------------------

## Beschreibung

Die Erfindung bezieht sich auf ein Verfahren zur Steuerung des Schmelz- und Gießvorganges der Feingießtechnik gemäß dem Oberbegriff des Patentanspruches 1 sowie auf eine Vorrichtung zur Durchführung des Verfahrens gemäß dem Oberbegriff des Patentanspruches 8.

Halbautomatische oder vollautomatische Steuereinrichtungen für den Schmelz- und Gießvorgang sind aus folgenden Druckschriften bekannt: DE-OS 21 58 115, DE-AS 26 38 559, DE-OS 28 56 304, DE-OS 31 46 391, DE-OS 33 05 418, DE-OS 33 15 835, US 3 620 294 und dem Firmenprospekt "PRESTOMAT B1" der Firma DEGUSSA. Weiterhin ist aus der nach dem Prioritätstage der vorliegenden Anmeldung veröffentlichten DE-OS 33 45 542 der Anmelderin eine ähnliche Steuerung bekannt.

Bei der DE-OS 21 58 115 wird der Gießvorgang dann eingeleitet, wenn nach Erreichen einer fest vorgegebenen Temperatur der Schmelze eine ebenfalls fest vorgegebene Zeitdauer verstrichen ist. In dem Firmenprospekt "PRESTOMAT B1" und der DE-OS 31 46 391 wird das Schmelzgut nach einer fest vorgegebenen Temperaturkurve, die als Sollwert für eine Regelung dient, erwärmt.

Bei der DE-OS 28 56 304 werden in Abhängigkeit von der Temperatur des Schmelzgutes unterschiedliche Leistungsstufen eines Transformators für eine Widerstandsheizung geschaltet.

Bei der DE-AS 26 38 559 wird das Schmelzgut mit einer Induktionsspule erwärmt, wobei der durch die Induktionsspule fließende Strom gemessen wird. Sobald dieser Strom eine sprunghafte Abnahme zeigt, wird dies als Signal für das Erreichen der Liquidus-Temperatur ausgewertet.

Bei der US-PS 3 620 294 wird im Ergebnis ebenfalls eine Temperaturkurve nachgefahren.

Nachteilig an diesen bekannten Verfahren bzw. Vorrichtungen ist es, daß die Gießtemperatur des Schmelzgutes möglichst exakt bekannt sein muß und daß Meßfehler durch gealterte Meßfühler, unterschiedliche Strahlungseigenschaften der Tiegel etc. das gesamte Gießergebnis so weit verfälschen können, daß die Schmelze bzw.

das Gußteil unbrauchbar sind. Wird nämlich die Gießtemperatur zu niedrig gewählt, so ist das Schmelzgut
noch nicht vollständig geschmolzen, d. h. es sind noch
Primärkristalle vorhanden, was zu unbefriedigenden
Gießergebnissen führt. Wird umgekehrt die Gießtemperatur zu hoch eingestellt, so treten beim Gießen im
Formling Lunkerstellen auf.

Ein weiteres Problem liegt darin, daß die optimale
Gießtemperatur bei verschiedenen Legierungen unterschiedliche Werte hat, die bisher empirisch ermittelt werden mußten. Hierzu war es erforderlich,
die genaue Zusammensetzung der Legierung zu kennen
oder vor dem eigentlichen Gießen mühsame Versuche
zur Ermittlung der optimalen Gießtemperatur durchzuführen.

Aufgabe der Erfindung ist es daher, Verfahren und
Vorrichtung der gattungsbildenden Art dahingehend zu
verbessern, daß die optimale Gießtemperatur bzw. der
optimale Gießzeitpunkt auf einfache Weise ermittelbar
sind.

Diese Aufgabe wird durch die im Kennzeichenteil der
Patentansprüche angegebenen Merkmale gelöst.

Bei der Erfindung wird die Erkenntnis ausgenutzt,
daß der zeitliche Verlauf der Temperatur bzw. der
Strahlungsintensität des Schmelzgutes und insbesondere die zeitliche Änderung der Temperatur (Differentialquotient bzw. Differenzenquotient) hervorragende
Aussagen über den Zustand des Schmelzgutes liefern.
Besondere Aufmerksamkeit wird hierbei dem Schmelzintervall gewidmet. Bei Legierungen unterscheidet man Solidus_Temperatur und Liquidus-Temperatur. Beim Aufheizen erfolgt das erste Aufschmelzen bei der Solidus-Temperatur. In der Schmelze befinden sich dann noch Primärkristalle, welche erst beim Erreichen der Liquidus-Temperatur vollständig aufgeschmolzen sind. Die Schmelze ist dann flüssig. Sie fällt bei Erreichen der Liquidus-Temperatur im Tiegel zu einer Kugelform zusammen und hat damit bei Erreichen der Liquidus-Temperatur die kleinstmögliche Oberfläche. Durch diese Oberflächenverringerung ist auch der Effekt der DE-AS 26 38 559 zu erklären, daß bei Verwendung eines Induktionsofens die induzierte Leistung am Liquiduspunkt sprunghaft abnimmt.

Beim anfänglichen Aufheizen steigt die Temperatur der Schmelze kontinuierlich bis zur Solidus-Temperatur. Dann wird die zugeführte Wärme für die Phasenumwandlung benötigt. Die Temperatur der Schmelze steigt während der Phasenumwandlung mit einem anderen Gradienten. Bei manchen Legierungen steigt sie nahezu gar nicht, während bei anderen Legierungen die Abflachung der Temperaturkurve nur sehr undeutlich ausgeprägt ist. Nach vollständiger Phasenumwandlung (Liquidus-Temperatur) steigt bei weiterer Energiezufuhr die Temperatur wieder mit steilerem Gradienten an.

Ein Aspekt der Erfindung ist es, das Schmelzintervall automatisch durch Auswerten des zeitlichen Verlaufes der Temperatur zu identifizieren sowie durch externe Steuerung der Heizleistung das Schmelzintervall zu dehnen. Letzteres ist insbesondere bei Legierungen von Bedeutung, bei denen die Temperaturkurve im Schmelzintervall nur eine schwach ausgeprägte Abflachung hat. Hiermit wird auch dem Effekt entgegengewirkt, daß bei der üblicherweise hohen Heizleistung einer Induktionsspule die Schmelze nur inhomogen erwärmt wird und damit beispielsweise an der Oberfläche die Liquidus-Temperatur bereits erreicht ist, während im Inneren der Schmelze noch keine vollständige Phasenumwandlung stattgefunden hat. Dies kann dadurch erklärt werden, daß durch das Magnetfeld in der beheizten Schmelze Induktionsströme entstehen, die die Temperatur steigern, wobei bei hoher Energie oder hohen Frequenzen wegen des "Skin-Effektes" die äußeren Schichten des Schmelzgutes stärker aufgeheizt werden als das Innere der Schmelze. In diesem Fall ist das Schmelzintervall nicht deutlich ausgeprägt, insbesondere fehlt ein eindeutig erkennbarer horizontaler Abschnitt der Temperaturkurve. Aus diesem Grunde und um eine homogene Temperatur in der Schmelze zu erzielen, wird nach einem Aspekt der Erfindung bei Annäherung an die Solidus-Temperatur oder zumindest bei Erreichen derselben die Heizleistung zurückgeschaltet, während sie beim Aufheizen bis zur Solidus-Temperatur und nach Erreichen des Schmelzintervalles wieder auf höhere Werte geschaltet wird. Nach Durchlaufen des Schmelzintervalles wird das Schmelzgut nach einem Aspekt der Erfindung um einen vorgegebenen Temperaturwert weiter aufgeheizt, bis die Gießtemperatur erreicht ist.

Dieser Temperaturwert, um den die Schmelze nach Erreichen der Liquidus-Temperatur überhitzt wird, könnte vom Bediner extern vorgegeben werden (z.B. 100°C über der Liquidus-Temperatur). Hierbei tritt jedoch die Gefahr von Bedienungsfehlern auf, zumal der jeweils optimale Wert der Temperaturüberhöhung (über die Liquidus-Temperatur hinaus) noch von weiteren Faktoren abhängt, wie z. B. der Art der verwendeten Legierung, der zu gießenden Menge etc.

Der wichtigste Aspekt der Erfindung beschäftigt sich daher primär mit dem Problem, die optimale Gießtemperatur bzw. den optimalen Gießzeitpunkt ausgehend vom Liquiduspunkt zu bestimmen. Hierzu schlägt die Erfindung mehrere Varianten vor. Bei einer ersten Variante wird nach Erreichen der Liquidus-Temperatur für eine fest vorgegebene Zeitdauer (z. B. 22 s) weiter geheizt und dann der Geißvorgang ausgelöst. Nach einer anderen Variante wird eine Temperaturüberhöhung als Auslösekriterium verwendet. In beiden Fällen wird nach einer Weiterbildung der Erfindung das jeweils aktuelle Auslösekriterium (Zeit oder Temperaturüberhöhung) bei jedem Gießvorgang gemessen und gespeichert. Ergibt sich nach dem Gießen und Abkühlen, daß ein einwandfreies Gießergebnis vorliegt, so können bei späteren Schmelz- und Gießvorgängen diese gespeicherten Werte des Auslösekriteriums abgerufen und als Sollwert für die Auslösung des Gießvorganges verwendet werden. Nach einer Weiterbildung der Erfindung werden während des gesamten Aufheizvorganges bis zum Gießzeitpunkt alle Temperaturwerte in Abhängigkeit der Zeit gespeichert. Es wird also die "Temperaturkurve" gespeichert. Bei nachfolgenden Schmelzvorgängen stellt sich eine Temperaturkurve ein, deren exakter Verlauf von vielen Parametern, wie z. B. Art der Legierung, Menge etc. abhängt. Der dann aktuell gemessene Kurvenverlauf wird mit den gespeicherten Kurvenverläufen verglichen. Dies kann kontinuierlich oder abschnittweise geschehen. Entspricht nun die gemessene Kurve innerhalb vorgegebener Toleranzen einer der gespeicherten Kurven, so wird die gespeicherte Kurve identifiziert und als Sollwert für die weitere Aufheizung verwendet. Sobald also eine der gespeicherten Kurven identifiziert wurde, wird der weitere Aufheiz- und Gießvorgang nur noch nach dieser Kurve gesteuert.

In Weiterbildung dieser Variante ist auch vorgesehen, die Istwerte der Temperaturkurve sowie sonstige gemessene oder eingegebene Parameter auszudrucken. Hierdruch hat in der Dentaltechnik das Zahnlabor und/oder der Zahnarzt einen eindeutigen Nachweis über die "Vorgeschichte" des gegossenen Gegenstandes.

Weiter ist zu beachten, daß auch die Menge des Schmelzgutes ein Parameter ist, der das Gießergebnis beeinflußt. So muß beispielsweise bei größerer Menge das Schmelzintervall möglichst langsam durchfahren werden. Auch muß bei größerer Menge die Temperaturüberhöhung über die Liquidus-Temperatur hinaus etwas größer sein, um die während des Gießens auftretenden Abkühlungen der Schmelze für die bei größerer Menge benötigte Gießzeit auszugleichen. Nach einer Weiterbildung der Erfindung wird die Menge des zu schmelzenden Gutes in überraschend einfacher Weise dadurch bestimmt, daß der Wert der von der Induktionsspule aufgenommenen und damit auch von ihr im Schmelzgut induzierten Leistung gemessen wird. Bei konstanter Speisespannung wird hierzu der der Induktionsspule zugeführte Strom gemessen. Dieser gemessene Wert wird als Korrekturwert für die Steuerung verwendet. Insbesondere werden die Werte für die Auslösekriterien (Zeit oder Temperaturerhöhung) entsprechend erniedrigt oder heraufgesetzt.

0191350

-8-

Im folgenden wird die Erfindung anhand von Ausführungsbeispielen im Zusammenhang mit der Zeichnung ausführlicher
erläutert. Es zeigt:

Fig. 1       den Temperaturverlauf des Schmelzgutes bei
             dem Verfahren nach der Erfindung beim Gießen
             an der Atmosphäre;

Fig. 2       einen ähnlichen Temperaturverlauf beim Gießen
             im Vakuum;

Fig. 3       zwei Vergleichskurven des Temperaturverlaufes
             mit normalem und gestrecktem Schmelzintervall;

Fig. 4
und          zwei Ausführungsbeispiele von Gießgeräten,

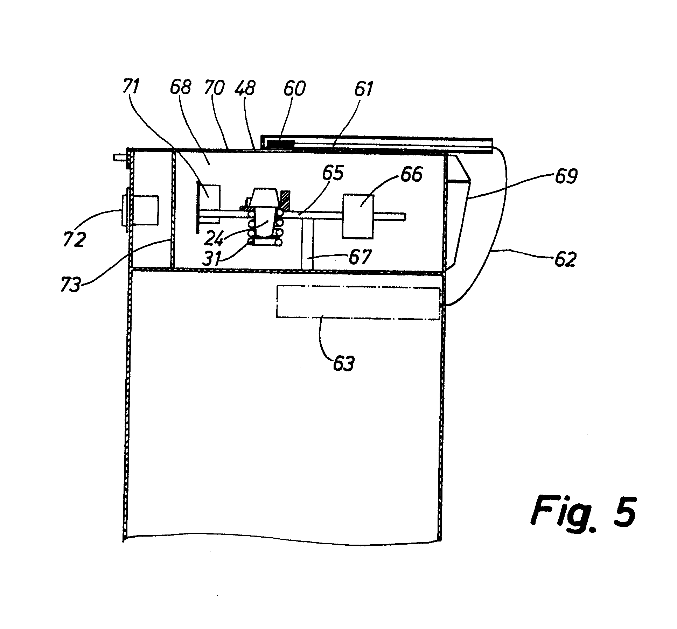

Fig. 5       bei denen die Erfindung zur Anwendung kommt;

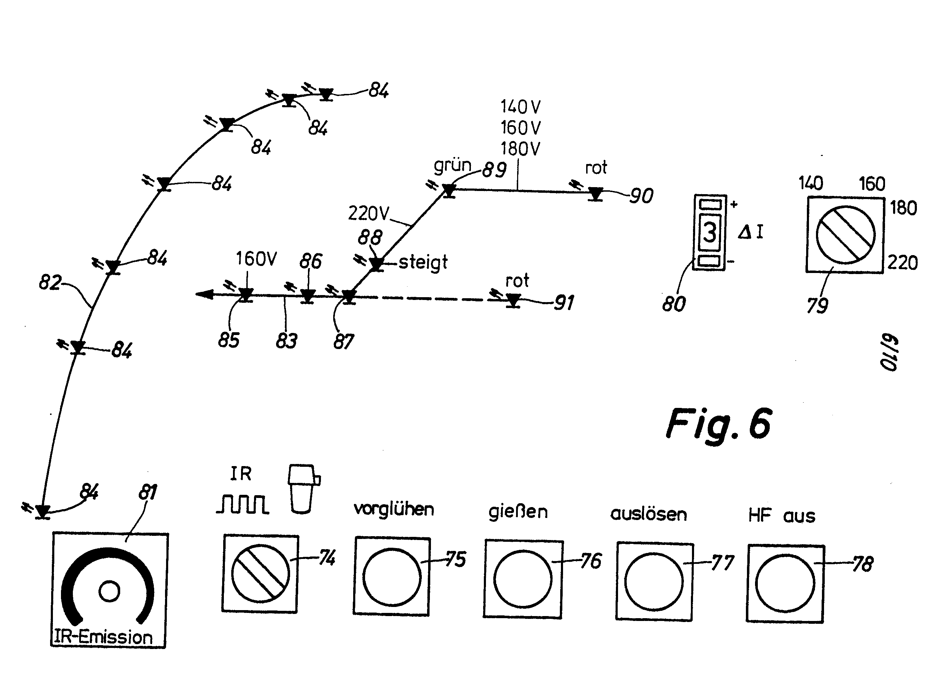

Fig. 6       eine schematische Ansicht eines Bedientableaus
             für die Vorrichtung nach der Erfindung;

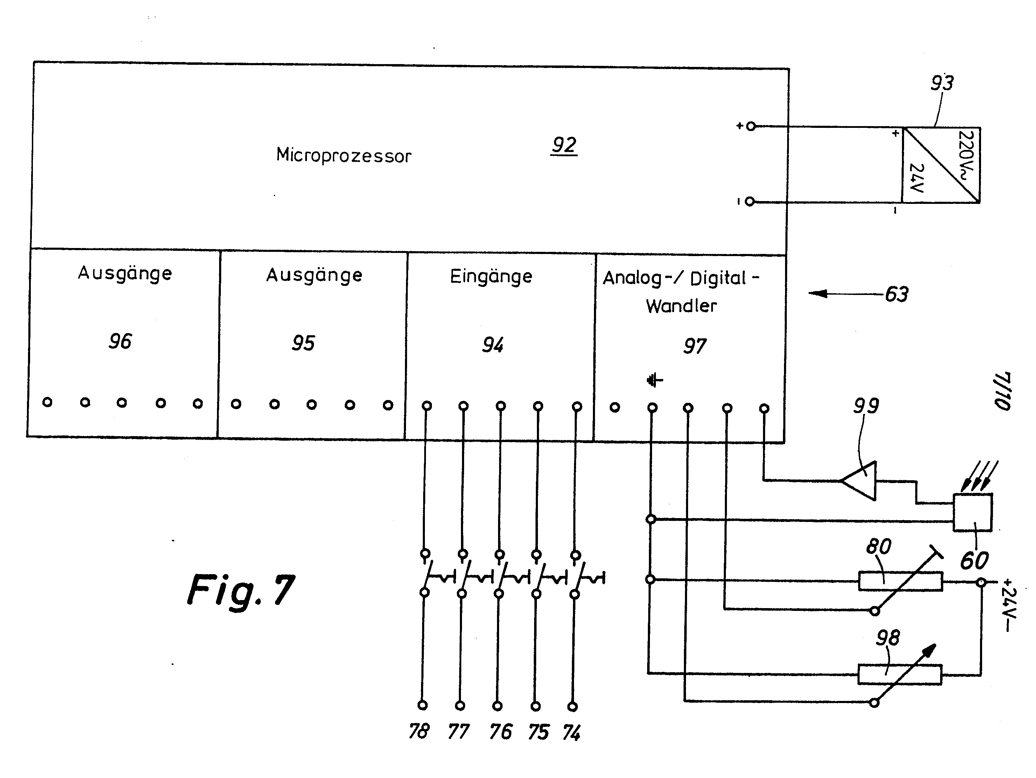

Fig. 7       ein Blockschaltbild der Steuereinheit der
             Vorrichtung nach der Erfindung;

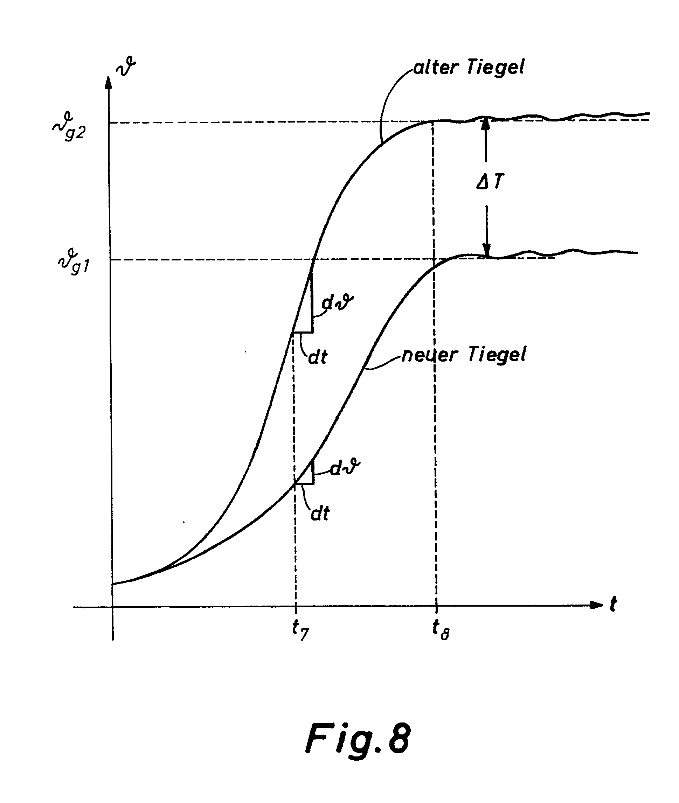

Fig. 8       den Temperaturverlauf bei alten und neuen
             Kohletiegeln;

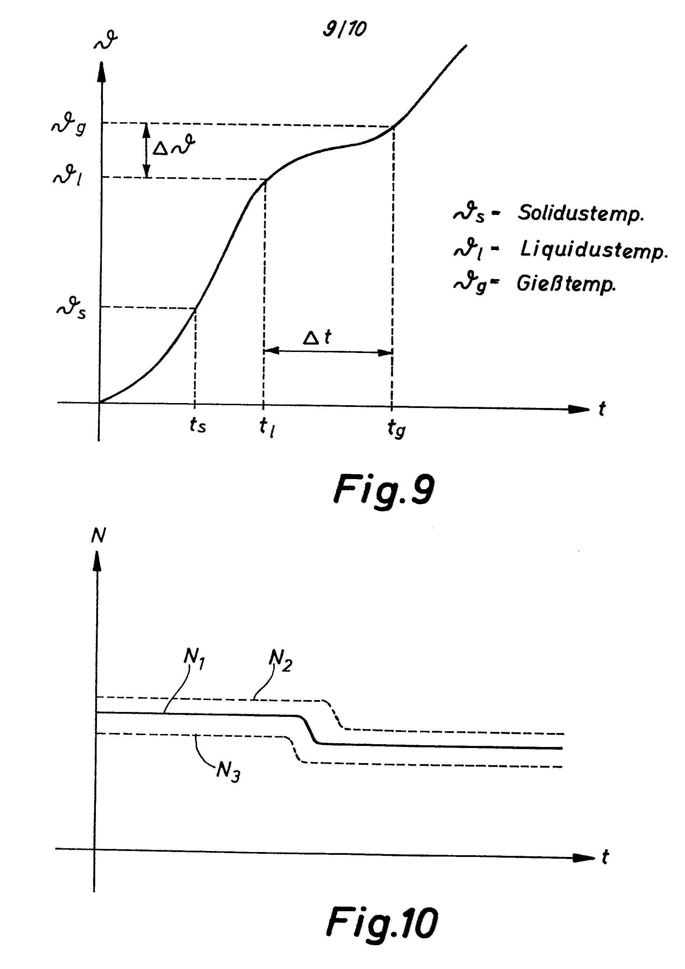

Fig. 9       den Temperaturverlauf des Schmelzgutes bei
             schwach ausgeprägtem Schmelzintervall, wie
             er beispielsweise bei Goldlegierungen auftritt;

Fig. 10      den zeitlichen Verlauf der von der
             Induktionsspule im Schmelzgut induzierten Leistung (bei konstanter
             Versorgungsspannung) bei verschiedenen
             Mengen des Schmelzgutes;

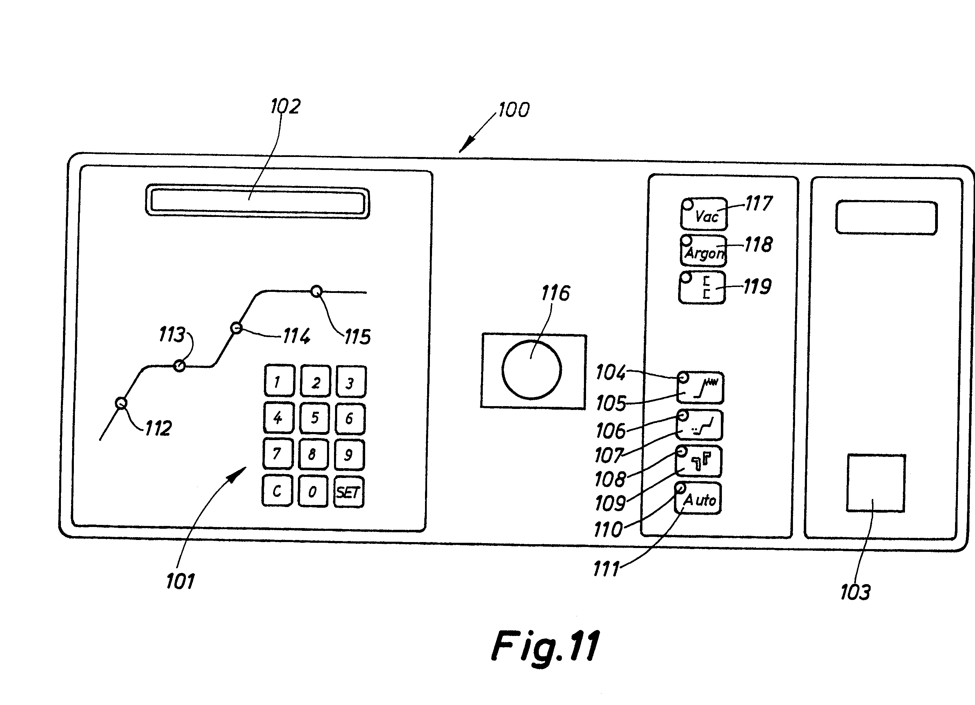

Fig. 11      eine weitere schematische Ansicht
             eines Bedientableaus für die Vorrichtung nach der Erfindung.

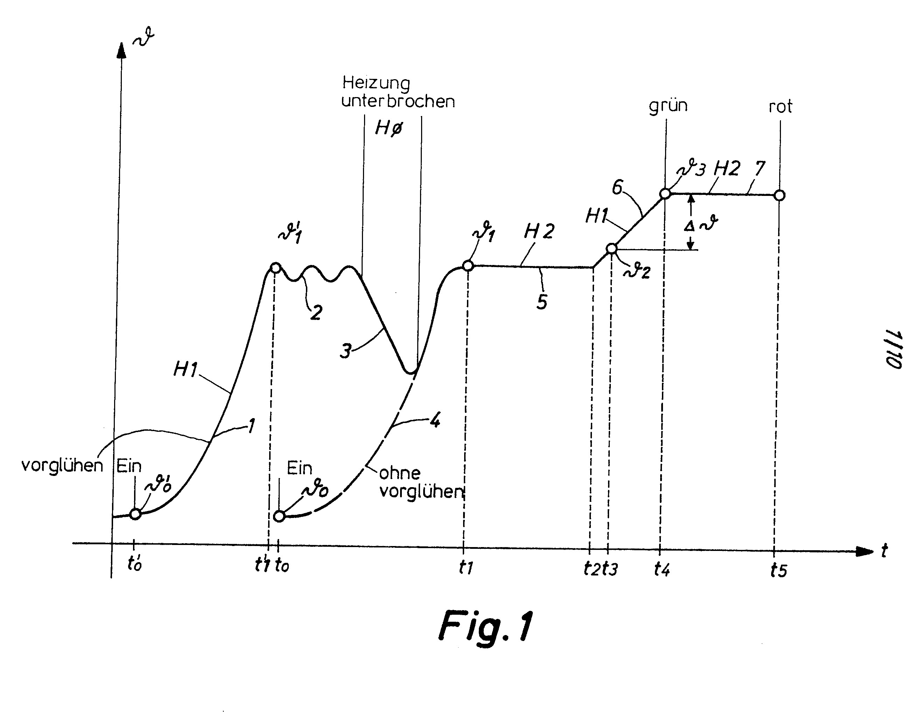

Fig. 1 zeigt ein Diagramm der Temperatur $\vartheta$ über der Zeit t. Das Schmelzgut befindet sich vor Einschalten der Heizung au fder Temperatur $t_0$ (Zeitpunkt $t_0$, $t'_0$). Zum an sich bekannten Vorglühen wird die Induktionsspule mit voller Heizleistung H1 betrieben. Die Temperatur der Schmelze steigt relativ schnell, d. h. steil an, was im Kurvenabschnitt 1 gezeigt ist. Zum Zeitpunkt $t'_1$ wird die Solidus-Temperatur $\vartheta'_1$ erreicht, d. h. erste Legierungsbestandteile gehen von der festen Phase in die flüssige Phase über. Trotz voller Heizleistung H1 steigt die Temperatur zu diesem Zeitpunkt nicht mehr so stark wie bisher an, vielmehr geht die Temperaturkurve in einen flachen Abshcnitt über. Beim Erreichen von $\vartheta'_1$ der Solidus-Temperatur, wird in der Kurve H1 ein Abflachen erkannt. Der Differentialquotient d$\vartheta$/dt ist also kleiner als ein Sollwert. Beim Vorglühen wird nun die Beheizung periodisch ein- und ausgeschaltet, um die Gußstücke auf der erreichten Temperatur zu halten. Die Beheizung wird geregelt durch Messung der Strahlungsintensität (entsprechend $\vartheta_1'$). Die dargestellten oszillierenden Temperaturverläufe ergeben sich aus der Ein- und Ausschaltung der Heizung. Dieses sogenannte "Vorglühen" ist wichtig, um alle Gußstücke in der Nähe der Solidus-Temperatur auf die gleiche Temperatur zu bringen.

Nach Ablauf einer vorgegebenen Zeitdauer seit dem Erreichen der Solidus-Temperatur $\vartheta'_1$ wird das Vorglühen beendet, d. h. die Heizung wird abgeschaltet (Heizleistung H0). Es ist dann auch möglich, eine Gußmuffel in das Gießgerät einzulegen. Wegen der abgeschalteten Heizleistung fällt die Temperatur wieder etwas ab, was im Kurvenabschnitt 3 dargestellt ist. Sodann wird die Heizung wieder voll eingeschaltet, d. h. auf die Heizleistung H1. Es folgt wiederum ein verhältnismäßig steiler Temperaturanstieg, bis zum Zeitpunkt $t_1$ die Temperaturkurve abflacht und die Solidus-Temperatur $\vartheta_1$ wiederum erreicht ist. Dies wird dadurch erkannt, daß der zeitliche Anstieg oder genauer gesagt der Differentialquotient $d\vartheta/dt$ unter einen vorgegebenen Wert fällt. Der Beginn des Schmelzintervalles ist nun erreicht.

Wird ohne Vorglühen geheizt, so wird vom Zeitpunkt $t_0$ und der Temperatur $\vartheta_0$ längs der gestichtelten Linie 4 hochgefahren, bis die Solidus-Temperatur $\vartheta_1$ erreicht ist.

Zum Strecken des Schmelzintervalles wird nun zum Zeitpunkt $t_1$ die Heizleistung auf einen geringeren Wert H2 umgeschaltet, so daß sich die Temperatur nur sehr geringfügig ändert. Dies ist durch den Kurvenabschnitt 5 dargestellt. Durch die Streckung des Schmelzintervalles ist nun eine homogene Temperaturverteilung möglich, und alle Legierungsbestandteile können von der festen in die flüssige Phase übergehen. Diese ist zum Zeitpunkt $t_2$ erreicht, worauf die Temperatur trotz der noch verringerten Heizleistung H2 wieder ansteigt. Dieses Ansteigen wird zum Zeitpunkt $t_3$ eindeutig identifiziert, da der Differentialquotient des Temperaturverlaufes wiederum einen bestimmten Schwellwert überschritten hat. Die zu diesem Zeitpunkt $t_3$ vorhandene Temperatur $\vartheta_2$ stellt in erster Näherung die Liquidus-Temperatur dar, die das Ende des Schmelzintervalles anzeigt. Diese Temperatur $\vartheta_2$ wird gespeichert, worauf die Heizung wieder auf volle Heizleistung H1 umgeschaltet wird. Die Temperatur steigt gemäß dem Kurvenabschnitt 6 weiter an. Ist die Temperatur der Schmelze ausgehend von der Liquidus-Temperatur $\vartheta_2$ um einen vorgegebenen festen Wert $\Delta\vartheta$ angestiegen und hat zum Zeitpunkt $t_4$ die Temperatur den Wert $\vartheta_3 = \vartheta_2 + \Delta\vartheta$ erreicht, so ist die gewünschte Gießtemperatur $\vartheta_3$ erreicht. Es wird nun ein die Gießbereitschaft anzeigendes Signal (in Fig. 1 Bezeichnung "grün") erzeugt, und gleichzeitig wird die Heizleistung wiederum auf einen geringeren Wert H2 umgeschaltet, der so gewählt ist, daß die Temperatur nicht weiter ansteigt (Kurvenabschnitt 7).

Es wird nun ein "Gießintervall" festgelegt, d. h. innerhalb einer festgelegten Zeitdauer ($t_4 - t_5$) ab dem Erreichen der Gießtemperatur $\vartheta_3$ muß der Gießvorgang abgeschlossen sein. In der konkreten Schaltung wird hierfür ein Zeitgeber gestartet, der nach Ablauf einer fest vorgegebenen Zeitdauer ein Warnsignal (in der Zeichnung mit "rot" bezeichnet) erzeugt, das anzeigt, daß die Gießzeit abgelaufen ist.

Aus Fig. 1 ist zu erkennen, daß bei der Erfindung - im Gegensatz zum Stand der Technik - nicht mehr mit einer fest voreingestellten Gießtemperatur gearbeitet wird;

0191350

-12-

vielmehr wird diese Gießtemperatur als relativer Wert aus dem Temperaturverlauf des Schmelzgutes ermittelt. Unabhängig von der jeweils zu schmelzenden Legierung wird somit selbsttätig die optimale Gießtemperatur ermittelt.

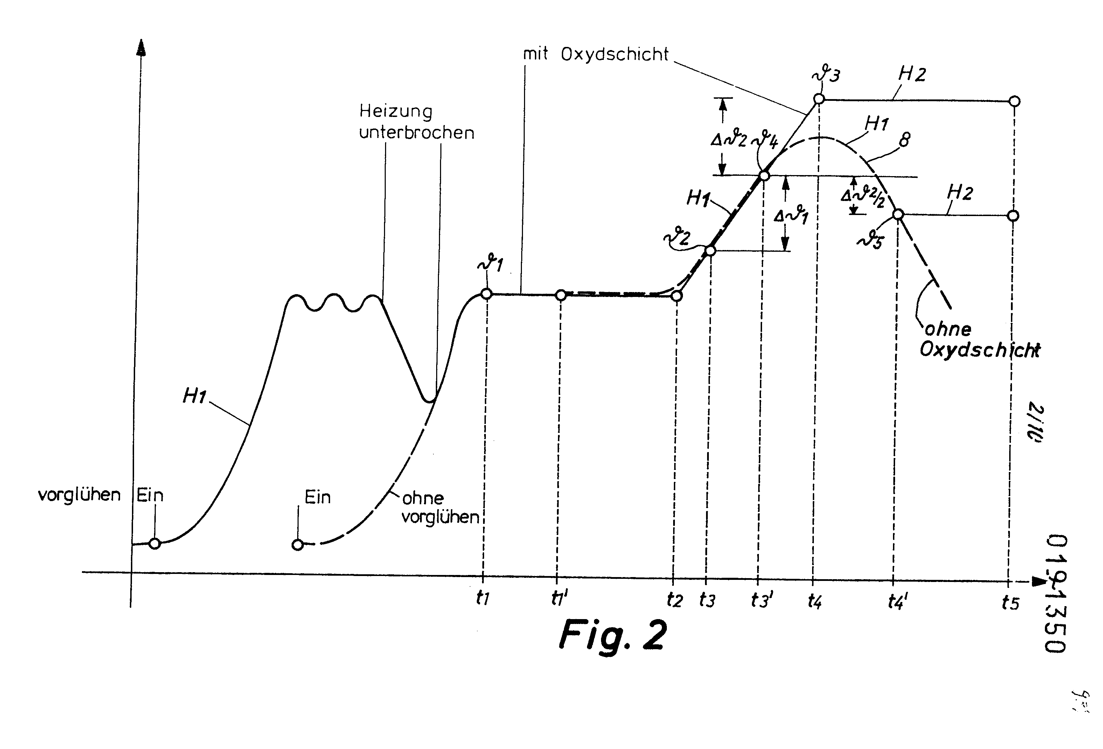

Fig. 2 zeigt eine ähnliche Temperaturkurve für das Gießen im Vakuum. Hier kann jedoch der Effekt auftreten, daß nach weiterem Aufheizen über die Liquidus-Temperatur $\vartheta_2$ eine Oxidschicht aufreißt. Werden Infrarot-Strahlungssensoren zur Temperaturmessung verwendet, so ändert sich durch das Aufreißen der Oxidschicht die Strahlungsintensität trotz weiter ansteigender Temperatur. Die von dem Infrarot-Strahlungssensor gemessene Strahlungsintensität folgt dem gestrichelten Kurvenabschnitt 8. Es könnte somit auftreten, daß meßtechnisch das Temperaturintervall $\triangle\vartheta$ der Fig. 1 nicht erfaßt wird.

Hierfür ist vorgesehen, daß bei einer vorbestimmten Zeitdauer $t_3 - t_3'$ nach Erreichen der Liquidus-Temperatur $\vartheta_2$, nachdem also die Temperatur sich um einen Wert $\triangle\vartheta_1$ erhöht hat, die zu diesem Zeitpunkt $t_3'$ vorhandene aktuelle Temperatur $\vartheta_4$ gespeichert wird. Reißt die Oxidschicht nicht auf, so läuft der Vorgang wie im Zusammenhang mit Fig. 1 beschrieben ab, d. h. es tritt eine weitere Temperaturerhöhung $\triangle\vartheta_2$ auf, bis bei der Temperatur $\vartheta_3$ die Gießtemperatur erreicht ist. Reißt dagegen die Oxidschicht auf, verläuft die Temperatur längs der gestrichelten Linie 8. Um diese beiden Verläufe unterscheiden zu können, wird nun laufend überwacht, ob nach dem ersten Erreichen der gespeicherten Temperatur $\vartheta_4$ zum Zeitpunkt $t_3'$ diese Temperatur (scheinbar) wieder unterschritten wird. Ist dies der Fall, wird abgewartet, bis die scheinbare Temperatur von dem Wert $\vartheta_4$ ausgehend um einen fest vorgegebenen Betrag $\triangle\vartheta_2 /_2$ weiter abgesunken ist und zum Zeitpunkt $t_4'$ der Temperaturwert $\vartheta_5$ erreicht ist. Zu diesem Zeitpunkt wird dann die scheinbare Gießtemperatur $\vartheta_5$ erkannt, die Heizleistung auf den verringerten Wert H2 umgeschaltet und das Gießsignal erzeugt, worauf wieder ein Gießintervall $(t_4' - t_5)$ vorgegeben wird.

Der Wert $\Delta\vartheta_2/2$, um den die Temperatur von dem Wert $\vartheta_4$ bis zur scheinbaren Gießtemperatur $\vartheta_5$ abfallen darf, entspricht in dem dargestellten Ausführungsbeispiel gerade der Hälfte der Temperaturdifferenz $\vartheta_2$, um welchen sich bei vorhandener Oxidschicht die Temperatur ausgehend von $\vartheta_4$ erhöht, bis die Gießtemperatur $\vartheta_3$ erreicht ist. Es sei jedoch ausdrücklich darauf hingewiesen, daß der Wert von $\Delta\vartheta_2/2$ rein zufällig gerade der Hälfte der Temperaturdifferenz $\vartheta_2$ entspricht. Er kann auch größer oder kleiner sein. Der jeweils optimale Wert hierfür wird durch Versuche empirisch ermittelt.

Die übrigen Kurvenabschnitte der Fig. 2 entsprechen denen der Fig. 1, so daß eine weitere Erläuterung nicht erforderlich ist.

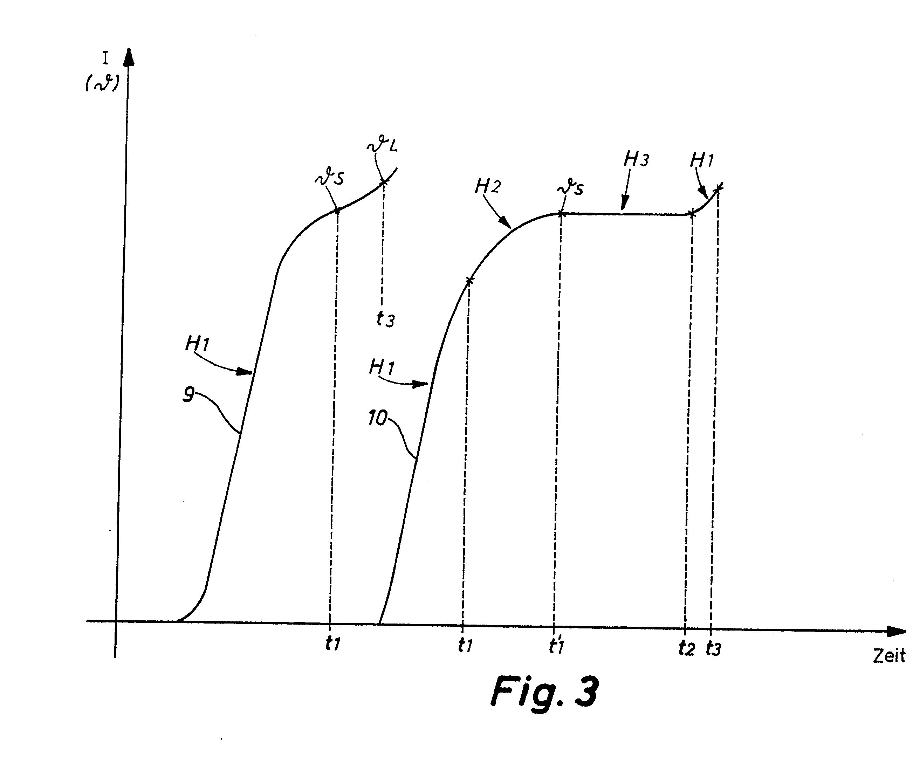

Fig. 3 zeigt deutlicher das Strecken des Schmelzintervalles. Wid nämlich die Temperatur mit voller Heizleistung H1 gemäß der Kurve 9 hochgefahren, so ist bei manchen Stoffen oder Legierungen kein ausgeprägter horizontaler Abschnitt der Temperaturkurve erkennbar. Wie Kurve 9 zeigt, verläuft die Temperatur zwischen Solidus-Temperatur $\vartheta_S$ und Liquidus-Temperatur $\vartheta_L$ zwischen den Zeitpunkten $t_1$ und $t_3$ mit deutlicher Steigung, wobei das Zeitintervall zum Durchlaufen dieser Temperaturdifferenz verhältnismäßig kurz ist. Wie oben erwähnt, kann es durch inhomogene Temperaturverteilung bzw. ungleichförmiges Erwärmen aufgrund des Skin-Effektes durchaus vorkommen, daß noch nicht alle Legierungsbestandteile, insbesondere im Inneren des Schmelzgutes schon in der flüssigen Phase sind, obwohl der Strahlungssensor, der ja im wesentlichen die Oberflächentemperatur mißt, bereits die Liqudius-Temperatur anzeigt. Durch Umschalten der Heizleistung kann dieser schädliche Effekt ausgeschaltet werden. Im Zusammenhang mit Fig. 1 und 2 wurde die Umschaltung von voller Heizleistung H1 (beispielsweise mit 220 V) auf verringerte Heizleistung (von beispielsweise 160 V) besprochen. In Kurve 10 der Fig. 3 kommen drei verschiedene Heizleistungen H1 (z. B. 220 V), H2 (z. B. 200 V) und H3 (z. B. 160 V) zur Anwendung. Hat die Temperaturkurve zum Zeitpunkt $t_1$ bei voller Heizleistung $H_1$ eine sich verlangsamende Steigung, d. h. unterschreitet der Differentialquotient $d\vartheta/dt$ einen vorgegebenen positiven Schwellwert zum Zeitpunkt $t_1$, so wird zunächst die Heizleistung auf die kleinere Stufe H 2 umgeschaltet. Die Temperaturkurve läuft nun flacher in den horizontalen Abschnitt ein, der zum Zeitpunkt $t_1'$ bei der Solidus-Temperatur $\vartheta_S$ beginnt. Sodann wird auf eine noch kleinere Heizleistung H3 umgeschaltet, so daß der günstige horizontale Temperaturkurvenabschnitt durchlaufen wird. Die Solidus-Temperatur wird dadurch erkannt, daß der Differentialquotient $d\vartheta/dt$ einen zweiten kleineren Schwellwert, beispielsweise Null erreicht. Beginnt nach Durchlaufen des horizontalen Abschnittes zum Zeitpunkt $t_2$ die Temperaturkurve wieder zu steigen, so läuft der Vorgang wie im Zusammenhang mit Fig. 1 und 2 beschrieben ab, d. h. zum Zeitpunkt $t_3$ wird wieder auf volle Heizleistung H1 umgeschaltet.

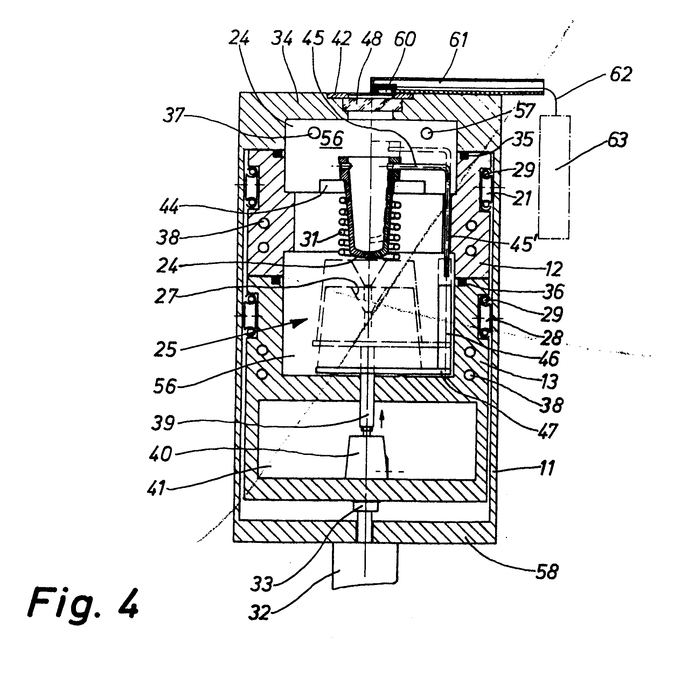

Im folgenden wird auf Fig. 4 Bezug genommen. Dort ist ein Gießgerät gezeigt, bei dem die vorliegende Erfindung zur Anwendung kommen kann. Dieses Gießgerät entspricht im wesentlichen dem Gießgerät der DE-OS 23 05 418.5 mit Ausnahme der für die Durchführung des Verfahrens nach der vorliegenden Erfindung notwendigen Teile. Fig. 4 zeigt im wesentlichen einen Vertikalschnitt durch ein Gießgerät. Ein Rahmentragwerk 11 ist im wesentlichen kastenförmig aufgebaut, an seiner Vorderseite zum Ein- und Ausfahren von Schubteilen 12 und 13 jedoch offen. Der obere Teil des Rahmentragwerks 11 besitzt einen verstärkten Querriegel 34, der ein nach unten gerichtetes U-förmiges Profil aufweist. Die horizontalen Stoßflächen dieses Profils liegen der Oberseite des oberen Schubteils 12 gegenüber, das ein im wesentlichen H-förmiges Querschnittsprofil besitzt. In dem Querbalken dieses H-förmigen Profils ist eine Ausnehmung vorgesehen, in welche ein Tiegel 24 einsetzbar ist. Rings um etwa die untere Hälfte des Tiegels 24 ist eine Induktionsspule 31 in gewissem Abstand zu dem Tiegel 24 angeordnet und sorgt in Verbindung mit einem Hochfrequenzgenerator (nicht dargestellt) für eine Aufheizung des Schmelzgutes in dem Tiegel 24. Der Tiegel 24 verläuft von oben nach unten konisch spitz zulaufend und hat im Bereich seines oberen Endes eine umlaufende Schulter bzw. einen Bund, der auf einem Haltering 44 zur Auflage kommt. Der Haltering 44 ist an der Oberseite des Querbalkens des H-förmigen Querschnittsprofils gelagert. Das obere Schubteil 12 ist in seitlichen Führungsschienen 21 gegenüber dem Tragwerk 11 verschiebbar. Die Lagerung erfolgt über Kugellager 29, wobei diese ein Spiel aufweisen, das eine vertikale Verschiebung des Schubteiles 12 erlaubt. Das Spiel ist hierbei so groß, daß das Schubteil 12 so weit in Richtung auf den oberen Querriegel 34 verschoben werden kann, daß die einander zugeordneten Stoßflächen des Schubteiles 12 und des Querriegels 34 miteinander in feste Berührung bringbar sind, wobei die in einer Nut an der Oberseite des Schubteils 12 vorgesehene Dichtung 35 für einen mit Über- oder Unterdruck belastbaren dichten Abschluß zwischen dem oberen Querriegel 34 und dem oberen Schubteil 12 sorgt. In der Wandung des Schubteiles 12 können eine oder mehrere Kühlmittelleitungen 38 vorgesehen sein, durch welche Kühlmittel, beispielsweise Wasser,geleitet werden.

Unterhalb des Schubteiles 12 ist ein unteres Schubteil 13 angeordnet, das ebenfalls in kugelgelagerten Führungsschienen 28 verschiebbar ist. Auch hier hat das Kugellager 29 ein Spiel, das eine vertikale Verschiebung des Schubteiles 13 erlaubt. Das Schubteil 13 besitzt ein im wesentlichen U-förmiges Querschnittsprofil, das in seinem Innenraum die Aufnahme einer Gußmuffel 25 ermöglicht. Die Oberseite des Schubteiles 13 bildet eine Stoßfläche, die mit der Unterseite des oberen Schubteiles 12 in Berührung bringbar ist. Auch hier ist in einer Nut an der Stoßfläche des unteren Schubteiles 13 eine Dichtung 36 eingelassen. Das untere Schubteil 13 ist durch eine Kolben-Zylinder-Anordnung (Zylinder 32 und Kolben 33), die an einem unteren Querriegel 58 an der Unterseite des Rahmentragwerks 10 abgestützt ist, vertikal verschiebbar. Wird das untere Schubteil 13 durch die Kolben-Zylinder-Anordnung 32, 33 angehoben, so drückt es gegen das obere Schubteil 12, wodurch dieses ebenfalls angehoben wird, bis es an dem oberen Querriegel zum Anschlag kommt. Der obere Querriegel 34, das obere Schubteil 12 und das untere Schubteil 13 bilden zusammen mit den Dichtungen 35 und 36 eine Kammer 56, die evakuierbar oder mit Druckgas beaufschlagbar ist. Diese Kammer 56 nimmt also den Tiegel 24 und die Gußmuffel 25 auf und bildet somit einen Schmelz- und Gießraum. Im oberen Querriegel sind Öffnungen 37 und 57 vorgesehen, über welche die Kammer 56 mit einer Vakuumpumpe oder einer Druckgasquelle verbindbar ist.

Zusätzlich zu der aus der Kolben-Zylinder-Anordnung 32, 33 gebildeten Hubeinrichtung, die zum Verschließen des Gießgerätes dient, ist eine weitere, aus Kolben-Zylinder-Anordnung 39, 40 gebildete Hubeinrichtung vorgesehen, die zum Anheben und Absenken der Gußmuffel 25 und zum gleichzeitigen Öffnen bzw. Schließen des Tiegels 24 dient. Die Kolben-Zylinder-Anordnung 39, 40 ist in einer Ausnehmung 41 im unteren Bereich des Schubteiles 13 angeordnet. Die Kolbenstange 39 ragt hierbei durch die Bodenwandung des

0191350

Schubteiles 13 hindurch und ist an einer Tragplatte 47 befestigt, welche die Gußmuffel trägt. Die Gußmuffel ist somit zwischen zwei Grenzstellungen verschiebbar, wobei die obere, gestrichelt dargestellte Grenzstellung für den Gießvorgang verwendet wird. Hierbei kommt dann ein Einfülltrichter 27 der Gußmuffel 25 dicht unterhalb der Ausgußöffnung des Tiegels 24 zu liegen. Die Tragplatte 47 ist nach einer Seite (rechts in Fig. 4) zu einem Verbindungsarm verlängert, an dem ein vertikaler Hubstößel 46 befestigt ist. Durch Anheben der Gußmuffel 25 wird somit auch der Hubstößel 46 angehoben. Dieser Hubstößel 46 fluchtet bei geschlossenen Schubteilen mit einem weiteren Hubstößel 45', der in einer Öffnung im Querteil des H-förmigen Querschnittprofils des Schubteiles 12 geführt ist und in einen horizontalen Hubarm 45 mündet, der in einer Bohrung eines der Tiegelteile befestigt ist. Die einander zugewandten Enden der beiden Hubstößel 45' und 46 liegen in der unteren Grenzstellung der Kolben-Zylinder-Anordnung 39, 40 in einem Abstand zueinander. Hierdurch wird ein toter Gang geschaffen, der dafür sorgt, daß erst kurz vor Erreichen der oberen Grenzstellung der Gußmuffel 25 die beiden Hubstößel 45' und 46 miteinander in Berührung kommen und dann bei dem letzten Teil der Aufwärtsbewegung der Gußmuffel 25 für ein Öffnen des Tiegels 24 sorgen. Oberhalb des Tiegels 24 besitzt der Querriegel 34 eine Öffnung, die über ein Schauglas 48 verschlossen ist. Das Schauglas 48 ist mittels eines Halteringes 42 befestigt. Oberhalb des Schauglases ist ein Temperaturfühler in Form eines Infrarot-Strahlungssensors 60 angebracht. Mittels einer Halterung 61 sind der Sensor 60 sowie seine Zuleitungen 62 an dem oberen Querriegel 34 gehalten. Die Zuleitungen 62 führen zu einem Steuergerät 63, welches auch beispielsweise über Magnetventile die Kolben-Zylinder-Anordnung 39, 40, welche den Gießvorgang auslöst, steuert. Ist also gemäß dem oben beschriebenen Verfahren die optimale Gießtemperatur erreicht, so kann der Gießvorgang hier automatisch ablaufen.

-18-

Fig. 5 zeigt eine andere Gießvorrichtung, bei der die Erfindung zur Anwendung kommen kann. Hier sind Tiegel 24 und Heizeinrichtung 31 an einem Dreharm 65 befestigt, der ein Gegengewicht 66 aufweist und um eine vertikale Achse 67 drehbar ist. Hier handelt es sich um eine Schleudergußvorrichtung mit einem Schleuderraum 68, der von oben her zugänglich ist, da sein Gehäusedeckel 70 über ein Scharnier 69 aufklappbar ist. Mit 71 ist eine Aufnahme für eine Gießform bezeichnet. Ein Steuerpult 72 ist über eine Trennwand 73 von dem Schleuderraum 68 getrennt.

Fig. 6 zeigt einen Ausschnitt des Steuerpultes der Vorrichtung nach der Erfindung. Es sind verschiedene Steuerfunktionsschalter bzw. -taster vorgesehen. Mittels eines Schalters 74 können zunächst zwei Betriebsarten ausgewählt werden. Zum einen die Betriebsart, bei dem der Gießvorgang bei Erreichen einer am Regelknopf 81 voreingestellten Gießtemperatur ausgelöst wird, sowie die Betriebsart, bei der die Gießtemperatur nach der Erfindung automatisch ermittelt wird. Mit einem Taster 75 wird der im Zusammenhang mit Fig. 1 beschriebene Vorgang des Vorglühens gestartet. Mit einem Taster 76 wird der im Zusammenhang mit Fig. 1 beschriebene Vorgang ohne Vorglühen (Kurvenabschnitt 4) gestartet. Über den Taster 77 kann manuell der Gießvorgang ausgelöst werden. Mit einem Taster 78 kann die Heizung jederzeit, auch während des automatischen Ablaufes, ausgeschaltet werden.

Mit einem Schalter 79 können verschiedene Heizstufen für die Heizleistung bei Erreichen der Gießtemperatur vorgewählt werden. Über ein Stellorgan 80 kann die Temperaturdifferenz $\Delta\vartheta$ gemäß Fig. 3 vorgewählt werden.

Sodann sind zwei Temperaturkurven 82 und 83 vorgesehen längs denen Leuchtdioden 84 bis 91 angeordnet sind. Diese Leuchtdioden zeigen der Bedienperson an, in welchem Kurvenabschnitt sich die Temperatur jeweils befindet. Wird über den Schalter 74 die erste Betriebsart ausgewählt, so läuft die Temperatur längs der Kurve 82, worauf in Abhängigkeit von der jeweils erreichten Temperatur die entsprechende Diode 84 aufleuchtet, bis bei Erreichen der am Regelknopf 81 voreingestellten Endtemperatur die letzte Diode leuchtet.

Wird die zweite Betriebsart mit automatischer Ermittlung der optimalen Gießtemperatur ausgewählt, so fährt die Temperatur zunächst auch längs der Kurve 82. Bei Erreichen der Solidus-Temperatur $\vartheta_S$ leuchtet die Diode 85. Befindet man sich einige Zeit nach Erreichen dieser Temperatur immer noch im Schmelzintervall, so leuchtet die Diode 86. Beginnt die Temperatur am Ende des Schmelzintervalles wieder zu steigen, so leuchtet die Diode 87 bzw. ab Erreichen der Temperatur $\vartheta_2$ die Diode 88. Ist die Gießtemperatur $\vartheta_3$ erreicht, so leuchtet die Diode 89 hier mit grüner Farbe. Zum Zeitpunkt $t_5$, d. h. nach Ablauf des Gießintervalles, leuchtet die rote Diode 90. Sobald die Diode 89 leuchtet, muß die Bedienperson daher den Taster 77 drücken. Leuchtet dagegen die Diode 90, so erkennt erkennt er, daß er den Gießvorgang nicht mehr auslösen darf.

Treten während des automatischen Ablaufes Betriebsstörungen auf, steigt insbesondere nach Durchlaufen des Schmelzintervalles die Temperatur nicht deutlich an, so wird nach Ablauf einer vorgegebenen Zeitdauer durch das Leuchten der Diode 91 angezeigt, daß die Maximalzeit überschritten ist, ohne daß die Gießtemperatur erreicht wurde. Der Schmelzvorgang ist dann abzubrechen.

Fig. 7 zeigt ein Blockschaltbild der Steuereinheit 63. Kernstück der Steuereinheit ist ein Mikroprozessor 92, der über einen Transformator 93 mit der Netzspannung versorgt wird. Einer der Ausgänge 95 oder 96 des Mikroprozessors schaltet ein Relais, welches über den Schalter 79 die richtige Heizleistung nach Erreichen der Gießtemperatur ansteuert. Der Mikroprozessor besitzt mehrere Eingänge 94, die mit den Schaltern bzw. Tastern gemäß Fig. 6 verbunden sind, wie mit dem Bezugszeichen 74 bis 78, die sich auf die Schalter bzw. Taster der Fig. 6 beziehen, angedeutet.

Weiterhin besitzt der Mikroprozessor mehrere Ausgänge 95 und 96, die einerseits die Leuchtdioden 84 bis 91 ansteuern und andererseits die verschiedenen Leistungsstufen für die Heizleistung umschalten, die Heizleistung ganz abschalten und/oder Betätigungsorgane zum Auslösen des automatischen Gießens ansteuern.

Als weiteren Eingang für den Mikroprozessor 92 ist ein Analog/Digital-Wandler 97 vorgesehen, dessen Eingängen folgende Signale zugeführt werden: zunächst das Ausgangssignal des Infrarot-Strahlungssensors 60, welches ggf. über einen Verstärker 99 noch verstärkt wird; sodann ein Signal eines Potentiometers 80 (vgl. auch Fig. 6), mit welchem die Temperaturdifferenz $\Delta\vartheta$ gemäß Fig. 1 voreingestellt wird bzw. genauer ein vorgegebener Wert $\vartheta I$ für das Ausgangssignal des Sensors 60, wobei dieses Signal entsprechend der Strahlungs-Strom- bzw. Spannungscharakteristik des Sensors dem Wert $\Delta\vartheta$ entspricht. Schließlich kann auch über ein Potentiometer 98, welches dem Regelknopf 81 entspricht, bei der Betriebsart gemäß Kurve 82 der Fig. 6 der Absolutwert der Gießtemperatur eingestellt werden.

Der Mikroprozessor 92 wertet das analog/digital-gewandelte Teil des Sensors 90 laufend aus, bildet den Differentialquotienten bzw. genauer den Differenzenquotienten zur Ermittlung der Steigung der Temperaturkurve, führt die beschriebenen Vergleichsoperationen aus, errechnet ggf. die beschriebenen Korrekturwerte und erzeugt die verschiedenen Steuersignale an seinen Ausgängen. Hierzu enthält der Mikroprozessor - wie üblich - Recheneinheiten, Datenspeicher, Programmspeicher sowie bei den Blöcken für die Ausgänge 95 und 96 die entsprechenden Treiberschaltungen. Nach den oben angegebenen Erläuterungen ist es einem Fachmann ohne weiteres möglich, den Mikroprozessor so zu programmieren, daß er die beschriebenen Verfahrensschritte ausführt.

Fig. 8 zeigt Temperaturverläufe von alten und neuen Tiegeln, die nach der Erfindung automatisch unterschieden werden können. Üblicherweise werden Legierungen in Keramiktiegeln geschmolzen, während Gold im Kohletiegel geschmolzen wird, der in einen Keramiktiegel eingesetzt ist. Kohletiegel zeigen nun bei gleicher Temperatur unterschiedliche Strahlungsintensitäten, wobei neue, unverbrauchte Tiegel eine geringere Strahlungsintensität (dunklere Strahlung) aufweisen als mehrfach benutzte, ältere Tiegel. Bei Temperaturmessung mittels Infrarot-Strahlungsdetektor würde dies eine Verfälschung des Meßergebnisses mit sich bringen.

Zur Vermeidung dieses Fehlers wird während der ersten Aufheizphase, d. h. vor Erreichen der Liquidus-Temperatur die Steigung der Kurve ermittelt. Im einzelnen wird eine vorgegebene Zeitdauer nach dem Einschalten der vollen Heizleistung, d. h. im Beispiel der Fig. 8 zum Zeitpunkt $t_7$ die Steigung der Kurve durch Bildung des Differentialquotienten $d\vartheta/dt$ (in Digitaltechnik des Differenzenquotienten) festgestellt. Dieser Wert wird mit einem vorgegebenen Schwellwert verglichen. Liegt der ermittelte Steigungswert unter dem Schwellwert, so liegt ein neuer Tiegel vor, während umgekehrt ein alter Tiegel erkannt wird. Versuchsmessungen haben nun ergeben, daß in dem interessierenden Temperaturbereich für die Gießtemperatur (z. B. 1.500 °C) das Ausgangssignal eines Infrarot-Strahlungssensors sich um einen relativ konstanten Wert $\Delta T$ bei alten und neuen Tiegeln unterscheidet. Durch Addition bzw. Subtraktion dieses Wertes $\Delta T$ können die beiden Kurven der Fig. 8 so transformiert werden, daß für beide Fälle eine einzige, korrigierte Kurve verwendet werden kann. Wählt man die Kurve für den alten Tiegel als maßgebliche Kurve und legt man dementsprechend die Gießtemperatur auf den Wert $\vartheta_g 2$, so muß man, wenn das Vorliegen eines neuen Tiegels - wie oben beschrieben - erkannt wurde, lediglich zu dem Ausgangssignal des Infrarotsensors den Wert $\Delta T$ hinzuaddieren. Erreicht das Ausgangssignal des Infrarot-Strahlungssensors den Wert $\vartheta_g 1$, so wird durch die Addition von $\Delta T$ dann dem Mikroprozessor der Wert $\vartheta_g 2 = \vartheta_{g_1} + \Delta T$ signalisiert, der dann als der voreingestellte Wert für die Gießtemperatur erkannt wird.

Umgekehrt könnte man natürlich auch die Kurve für den neuen Tiegel als Bezugskurve heranziehen. In diesem Falle müßte beim Erkennen eines alten Tiegels von dem Ausgangssignal des Sensors der Wert $\Delta T$ subtrahiert werden, wobei als Schwellwert für das Erkennen der Gießtemperatur dann natürlich der Wert $\vartheta_{g_1}$ gespeichert werden müßte.

Als günstige Werte für einzelne oben beschriebene Größen haben sich folgende Werte erwiesen:
Für die Beheizung einer Induktionsspule werden bei der größten Heizleistung H1 220 V verwendet. Für die Heizleistung H2 der Fig. 3 (sanftes Einlaufen in das Schmelzintervall) haben sich 200 bzw. 180 V als günstig erwiesen. Für die Heizleistung H3 während des Schmelzintervalles sowie auch während des Gießintervalles (Heizleistung H2 der Fig. 1) werden 160 V empfohlen.

Als Temperaturdifferenz $\Delta\vartheta$ (in Fig. 1) für die Überhitzung des Schmelzgutes über die Liquidus-Temperatur hinaus sind 100 $^{\circ}$C zweckmäßig.

Die oben beispielhaft angegebenen Spannungswerte beziehen sich auf einen Vorschalttransformator zur Ansteuerung des Hochspannungstransformators für die Hochfrequenzheizung (HF-Generator).

Fig. 9 zeigt eine Temperaturkurve (Temperatur über der Zeit) ähnlich der links in Fig. 3 dargestellten Kurve. Im Unterschied dazu ist in Fig. 9 die Liquidus-Temperatur $\vartheta_s$ dann erreicht bzw. sogar schon überschritten, wenn die Kurve eine Abflachung aufweist, wie z.B. bei Goldlegierungen. Nach einer Variante der Erfindung wird daher das Erreichen der Liquidus-Temperatur ($\vartheta_1$) dadurch bestimmt, daß der Differentialquotient d$\vartheta$/dt kleiner als ein vorgegebener Sollwert ist. Der Zeitpunkt, zu welchem die Liquidus-Temperatur erreicht wird, ist hier mit $t_1$ bezeichnet. Es wird nun der Gießzeitpunkt $t_g$ dadurch bestimmt, daß ab dem Zeitpunkt $t_1$ für eine vorbestimmte Zeitdauer $\Delta$t, die beispielsweise bei einer bestimmten Legierung bei 22 s liegen kann, mit konstanter Heizleistung weitergeheizt wird und dann nach Ablauf der Zeit $\Delta$t das Gießbereitschaftssignal erzeugt oder der Gießvorgang automatisch eingeleitet wird. Bezugsgröße ist also der Zeitpunkt des Erreichens der Liquidus-Temperatur und nicht der Beginn des Aufheizens.

Nach einer anderen Variante der Erfindung kann statt einer vorgegebenen Zeitdauer ein Temperaturkriterium verwendet werden. Nach Erreichen der Liquidus-Temperatur $\vartheta_1$ wird so lange mit konstanter Heizleistung weitergeheizt, bis eine Temperaturerhöhung um einen voreingestellten Wert $\Delta$t erreicht ist, womit die Gießtemperatur $\vartheta_g$ festgelegt ist.

Die Werte von $\Delta$t bzw. $\Delta\vartheta$ werden anfänglich vom Benutzer vorgegeben, beispielsweise durch Eingabe über eine Tastatur. Es handelt sich also zunächst um empirische oder gefühlsmäßig vorgegebene Werte. Diese können durchaus zu günstigen,aber auch zu ungünstigen Gießergebnissen führen.

Nach einer Weiterbildung der Erfindung werden die Gußwerte $\vartheta_g$, $t_g$, $\Delta\vartheta$ bzw. $\Delta t$ gespeichert. Weiterhin werden vom Benutzer Werte von weiteren Parametern, beispielsweise der Art der zu schmelzenden Legierung eingegeben. Erweist sich der jeweils zuletzt durchgeführte Gießvorgang als günstig, so läßt der Benutzer die erwähnten gespeicherten Werte im Speicher. Erweisen sich diese Werte als ungünstig, so löscht er sie. Nach mehreren solcher "Durchläufe" hat das Gerät nur noch günstige Werte, die zu optimalen Gießergebnissen führen, gespeichert. Bei zukünftigen Schmelz- und Gießvorgängen müssen nun diese Gießwerte bzw. die Werte $\Delta\vartheta$ oder $\Delta t$ nicht mehr extern eingegeben werden, sondern können aus dem Speicher abgerufen werden. Der Benutzer muß also nur noch gewisse Parameter, die weiter unten noch näher erläutert werden, eingeben, woraus dann die jeweils optimalen zugeordneten Werte aus dem Speicher abgerufen und für die Steuerung bzw. Bestimmung des Gießzeitpunktes verwendet werden.

Nach einer Weiterbildung der Erfindung wird bei jedem Schmelz- und Gießvorgang die gesamte Temperaturkurve gespeichert, beispielsweise in Form von Wertepaaren der Temperatur und der Zeit. Erweist sich eine gespeicherte Temperaturkurve nach Auswertung des Gießergebnisses als günstig, so bleibt sie gespeichert; anderenfalls wird sie gelöscht. Nach mehreren Durchläufen wird dann der Speicher eine Vielzahl von charakteristischen Temperaturkurven enthalten. Bei darauffolgenden Gieß- und Schmelzvorgängen wird die sich dann ergebende Kurve mit den gespeicherten Kurvenverläufen verglichen. Dies erfolgt bereits kontinuierlich während des Aufheizens der zu schmelzenden Probe. Statt eines kontinuierlichen Vergleichs kann der Vergleich natürlich auch abschnittsweise vorgenommen werden. Nach einiger Zeit, spätestens jedoch bei Erreichen des Liquiduspunktes (Zeitpunkt $t_1$), wird - vorausgesetzt, es sind genügend viele Kurvenverläufe gespeichert - eine Übereinstimmung (innerhalb vorgegebener Toleranzen) zwischen der gemessenen und dieser eingespeicherten Kurve festgestellt werden. Ab diesem Moment erfolgt die weitere Steuerung und insbesondere die Bestimmung von Gießzeitpunkt bzw. Gießtemperatur über die eine ausgewählte, gespeicherte Kurve, die regelungstechnisch als Sollwert verwendet wird. Damit erhält man - ohne daß weitere Parameter eingegeben werden müssen - stets eindeutig reproduzierbare Gießergebnisse.

Wie bereits eingangs erwähnt, beeinflußt die Menge des zu schmelzenden Gutes das Gießergebnis bzw. die Werte von $\Delta\vartheta$ oder $\Delta t$. Nach einer Weiterbildung der Erfindung, die nachfolgend unter Bezugnahme auf Fig. 10 erläutert wird, wird diese Menge indirekt dadurch bestimmt, daß der von der Induktionsspule aufgenommene Strom (bei konstanter Spannung) oder allgemeiner ausgedrückt, daß die von der Induktionsspule aufgenommene und damit in dem Schmelzgut induzierte Leistung gemessen wird. Bei kleinerer Menge ist - bei konstanter Versorgungsspannung - die Leistung kleiner als bei größerer Menge. Dies ist durch die Kurven $N_1$ bis $N_3$ der Fig. 10 dargestellt, in welcher der Verlauf der elektrischen Leistung über der Zeit dargestellt ist. Der relativ erprobte Leistungsabfall der Kurven wird durch den eingangs beschriebenen Effekt des Zusammenfallens der ursprünglich würfelförmigen Gußstücke bei Erreichen der Liquidus-Temperatur erklärt. Wie in Fig. 10 angedeutet, kann sich auch der Zeitpunkt des Erreichens der Liquidus-Temperatur bei unterschiedlichen Mengen verschieben. Die Aussage der Fig. 10 diesbezüglich ist jedoch rein qualitativ und hängt u. a. auch von der Anordnung der Gußwürfel in dem Tiegel ab. Nach Erreichen der Liquidus-Temperatur verlaufen die Leistungskurven wieder horizontal. Aus der absoluten Höhe der jeweils aufgenommenen Leistung lassen sich Rückschlüsse über die Menge ziehen. Hieraus werden dann Korrekturwerte für $\Delta\vartheta$ bzw. $\Delta$ t ermittelt. Beispielsweise wird bei Vorliegen einer großen Menge (Kurve $N_2$ der Fig. 10) und der Verwendung des Auslösekriteriums $\Delta$t der vorgegebene bzw. gespeicherte Wert um einen weiteren Betrag verlängert. Umgekehrt wird bei kleinerer Menge (Kurve $N_3$) dieser Wert verringert. Gleiches gilt in analoger Weise für das Auslösekriterium $\Delta\vartheta$.

Aus Fig. 10 ist zu erkennen, daß bereits bei Beginn der Aufheizung präzise Meßwerte über die aufgenommene Leistung vorliegen. Es ist daher auch möglich, nach Vorliegen dieser Leistungsmessung einen Korrekturfaktor zu ermitteln, mit welchem die gemessenen Temperaturwerte multipliziert werden. Die so korrigierten Temperaturwerte können dann - gemäß obigem Ausführungsbeispiel - mit den gespeicherten Kurven verglichen werden. Damit braucht man nicht für jede mögliche Menge von Gußwürfeln bzw. Gießmaterial eine eigene Kurve speichern. Es genügt vielmehr, für jedes Material nur eine geringe Anzahl von charakteristischen Kurven zu speichern, die dann mit den um den "Mengenfaktor" korrigierten Werten verglichen werden. Hierdurch wird Speicherplatz eingespart.

Fig. 11 zeigt das "Schalttableau" einer anderen Variante der Erfindung. Die verwendete Schaltung entspricht im Prinzip der der Fig. 7. Im Unterschied zur Version der Fig. 6 ist jetzt ein "Dialogbetrieb" möglich. Das Schalttableau 100 besitzt ein übliches Tastenfeld 101 mit zehn Tasten für die Ziffern 0 - 9, sowie einer Löschtaste C und einer Eingabetaste, die mit der Bezeichnung "Set" bezeichnet ist. Über ein Display 102, das beispielsweise aus einer LCD- oder einer LED-Anzeige besteht, werden - vom Mikroprozessor 92 gesteuert - Eingabewerte abgefragt oder Bedienschritte angefordert. Wird der Hauptschalter 103 eingeschaltet, so startet der Mikroprozessor 92 zunächst ein Prüfprogramm. Zunächst wird geprüft, ob das Gießgerät an Druckluft angeschlossen ist. Hierzu wird ein (nicht dargestellter) Drucksensor abgefragt. Zeigt dessen Ausgang an, daß keine Druckluft in ausreichender Höhe vorhanden ist, wird auf dem Display 102 angezeigt, daß Druckluft fehlt, beispielsweise durch die Anzeige "Druckluft". Der Bediener kann dann die erforderlichen Schritte einleiten. Ergibt - gegebenenfalls nach entsprechendem Eingriff des Bedieners - die Prüfung, daß Druckluft vorhanden ist, so wird in ähnlicher Weise geprüft, ob Kühlwasser vorhanden ist und ob das Gerät geschlossen ist, d. h. die "Schubladen" geschlossen sind. Auch hier erfolgt eine entsprechende Anzeige, und der nächste Schritt wird erst nach zufriedenstellender Prüfung des jeweils vorhergehenden Schrittes durchgeführt. Sodann fordert der Mikroprozessor 92 bestimmte, vom Bediener einzugebende Parameter an. Als erstes fragt er über das Display 102 die Eingabe einer hier einstelligen Nummer für das "Grundprogramm" ab. Es sind mehrere Grundprogramme für verschiedene Legierungen vorgegeben, beispielsweise für Kobalt-Chrom, Nickel-Chrom, Edelmetalllegierungen etc. Jedem dieser Grundprogramme ist eine vom Benutzer über die Tastatur 101 einzugebende Ziffer zugeordnet. Die Eingabe wird durch Drucken der Taste "Set" beendet. Nach Aufruf eines Grundprogrammes werden weitere Parameter abgefragt. So wird abgefragt, ob es sich um eine Legierung mit oder ohne Oxidschicht handelt (vgl. Fig. 2); ob es sich um eine Schmelze handelt, bei der die Oxidschicht aufreißt. Weiterhin wird je nach "Auslösekriterium für das Gießen" die Zeitdauer $\Delta t$ (Fig. 9) oder die Temperaturüberhöhung $\Delta\vartheta$ abgefragt. Schließlich wird noch die gewünschte Leistungsstufe für die Heizung abgefragt. Nach jeder Abfrage wird der entsprechende Wert vom Benutzer über die Tastatur 101 eingegeben und durch Drücken der Taste "Set" eingespeichert.

Nach einer Version kann, wenn statt einer Zifferneingabe nur die "Set"-Taste gedrückt wird, jeweils der höchstmögliche Wert für die einzelnen Parameter eingegeben werden. Schließlich kann abgefragt werden, ob die beim anschließenden Vorgang auftretenden Kurvenverläufe gespeichert werden. Diese Werte werden dann bestimmten Speicherbereichen zugewiesen, die über eine auf dem Display 102 erscheinende "Adresse" abrufbar sind. Somit kann der Benutzer statt der Eingabe des Grundprogrammes und der einzelnen Parameter auch direkt eine mehrstellige "Grundprogrammnummer" eingeben, die dann die unter dieser Adresse abgespeicherten Werte aufruft. Damit wird die Eingabe vereinfacht.

Nachdem nach Eingabe aller abgefragten Werte die "Set"-Taste gedrückt ist, startet der automatische Heizvorgang. Auf dem Display 102 erscheint die Anzeige "Start". Die Maschine wird beschickt,und nach Öffnen und anschließendem Schließen der Schublade wird abgefragt, ob vorgeglüht werden soll (vgl. Fig. 2). Hierzu blinkt eine Leuchtdiode 104 an einem Taster 105. Nach Druck des Tasters 105 leuchtet die Diode 104 dauernd. Die Induktionsheizung wird dann eingeschaltet, was durch Aufleuchten der Diode 112 angezeigt wird. Das Vorglühprogramm wird dann automatisch durchgefahren. Nach Beendigung des Vorglühens blinkt die Diode 104 wieder, und auf dem Display 102 erscheint das Kommando "Muffel einlegen". Die vorgewärmte Gußmuffel wird aus einem Vorheizofen geholt und in die entsprechende untere Schublade eingelegt. Nachdem die Schublade betätigt wurde, was über Schaltkontakte erkannt wird, erscheint auf dem Display 102 die Anzeige "Start Schmelzen". Die Diode 106 auf einem Taster 107 blinkt. Durch Drücken des Tasters 107 wird der Schmelzvorgang eingeleitet. Die Dioden 112, 113, 114 bzw. 115 zeigen das Durchlaufen der Schmelzkurve an.

Sobald gemäß den oben beschriebenen Kriterien die Gießbereitschaft erreicht ist, wird auf dem Display 102 angezeigt:"Gießen". Die Diode 115 leuchtet,und die Diode 108
in dem Taster 109 blinkt. Durch Drücken des Tasters 109
wird der Gießvorgang ausgelöst, indem bei dem oben beschriebenen Ausführungsbeispiel die beiden Tiegelhälften
vertikal gegeneinander verschoben werden, so daß das geschmolzene Gut in die darunterliegende Gußmuffel fließen
kann. Zu diesem Zeitpunkt ist die Diode 106 erloschen.
Statt einer manuellen Auslösung des Gießens kann auch
das Gießen automatisch ausgelöst werden. Hierzu muß vor
Start des Programmes der Taster 111 gedrückt werden, was
durch Leuchten der Diode 110 angezeigt wird. Ist der Guß
beendet, so werden auf dem Display 102 alle eingangs eingegebenen Parameter angezeigt. Durch Drücken der Taste
"Set" können jetzt die tatsächlich durchlaufenen und gemessenen Werte für das Erkennen der Gießbereitschaft angezeigt werden.

Durch weiteres Drücken der "Set"-Taste werden abwechselnd
die vom Benutzer eingegebenen und die tatsächlich durchfahrenen Parameter wechselweise zur Anzeige gebracht, um
einen Vergleich zu ermöglichen. Es ist nun möglich, die
aktuell durchlaufenen Parameterwerte einzuspeichern gemäß
der oben beschriebenen Speicher-Option.

Ein Neustart ist durch Drücken der Löschtaste "C" möglich.
Es wird dann das Grundprogramm - wie oben beschrieben -
durchfahren.

Bei bestimmten Grundprogrammen (abhängig von der jeweiligen Legierung) wird das "Vorglühen" nicht durchgeführt.
Ebenso kann durch bestimmte Grundprogramme vorgewählt werden, ob mit oder ohne Streckung des Schmelzintervalles gearbeitet werden soll. Je nach gewähltem Grundprogramm werden auch die oben ausführlich beschriebenen Gieß-Auslösekriterien abgerufen.

Fig. 11 zeigt noch - wie allgemein üblich - ein Schauglas 116, durch welches hindurch die Schmelze beobachtet werden kann. Für weitere Funktionen sind noch Taster bzw. Leuchtdioden 117,118,119 vorgesehen mit denen z.B. Vakuum eingeschaltet werden kann, Schutzgas zugeführt werden kann oder beim Gießen der Gußraum mit Druckluft beaufschlagt werden kann. bwz. derartige Zustände (einschließlich geschlossenen "Schubladen")signalisiert werden können. Für die Speicherung der verschiedenen Programme können auch steckbare Module beispielsweise in Form von "PROM's" verwendet werden. Damit kann das Gerät auch mit neu entwickelten Programmen nachgerüstet werden.

MEISSNER & BOLTE, Hollerallee 73, D-2800 Bremen 1

Hans Meissner · Dipl.-Ing. (bis 1980)
Erich Bolte · Dipl.-Ing.
Dr. Eugen Popp · Dipl.-Wirtsch.-Ing.*
Wolf E. Sajda · Dipl.-Phys.*
Dr. Ulrich Hrabal · Dipl.-Chem.*

BÜRO/OFFICE BREMEN
Hollerallee 73
D-2800 Bremen 1

Telefon: (04 21) 34 20 19
Telex: 2 46 157 meibo d
Telefax: (04 21) 34 22 96

Anmelder:

BEGO Bremer Goldschlägerei
Wilh. Herbst GmbH & Co.
Emil-Sommer-Str. 7
2800 Bremen 41

| Ihr Zeichen Your ref. | Unser Zeichen Our ref. | BEG-116-EP Bitte angeben/please quote | Datum Date 24. Januar 1986 |
|---|---|---|---|

Verfahren zur Steuerung des Schmelz- und Gießvorganges
der Feingießtechnik, insbesondere der Dentaltechnik,
und Vorrichtung zur Durchführung des Verfahrens

-----------------------------------------------------

Patentansprüche

1.   Verfahren zur Steuerung des Schmelz- und Gießvorganges der Feingießtechnik, insbesondere der Dentaltechnik bei dem das Schmelzgut erwärmt und die Temperatur des Schmelzgutes ständig gemessen wird, gekennzeichnet durch folgende Schritte:
- es wird ein erstes Signal erzeugt, das der zeitlichen
  Änderung $(d\vartheta/dt)$ der Temperatur des Schmelzgutes entspricht,
- das Erreichen der Liquidus-Temperatur $(\vartheta_2; \vartheta_1)$ des
  Schmelzgutes wird dadurch ermittelt, daß sich bei
  wirksam eingeschalteter Heizung das erste Signal
  $(d\vartheta/dt)$ vergrößert, worauf ein zweites Signal erzeugt wird, das das Erreichen der Liquidus-Temperatur anzeigt, und

- in Abhängigkeit von dem zweiten Signal und einem auf das zweite Signal bezogenen Kriterium werden das nachfolgende weitere Aufheizen des Schmelzgutes und das Auslösen des Gießvorganges gesteuert.

2. Verfahren nach Anspruch 1, dadurch gekennzeichnet, daß beim Schmelzen und Gießen bestimmter Legierungen, insbesondere von Goldlegierungen das auf das zweite Signal bezogene Kriterium eine vorgegebene Zeitdauer ($\Delta$t; z. B. 22 s) ist, die mit dem Auftreten des zweiten Signales beginnt, wobei nach Ablauf dieser Zeitdauer der Gießvorgang ausgelöst wird.

3. Verfahren nach Anspruch 1, dadurch gekennzeichnet, daß das auf das zweite Signal bezogene Kriterium eine vorgegebene Temperaturerhöhung ($\Delta\vartheta$) ist, wobei der Gießvorgang dann ausgelöst wird, wenn nach Erreichen der Liquidus-Temperatur die Schmelze zusätzlich um diese vorgegebene Temperaturerhöhung ($\Delta\vartheta$) erwärmt ist.

4. Verfahren nach Anspruch 2 oder 3, dadurch gekennzeichnet, daß die Istwerte des auf das zweite Signal bezogenen Kriteriums ($\Delta t$ oder $\Delta\vartheta$) gemessen und gespeichert werden und daß bei nachfolgenden Schmelz- und Gießvorgängen einer der gespeicherten Istwerte als Sollwert für das Auslösen des Gießvorganges verwendet wird.

5. Verfahren nach einem oder mehreren der Ansprüche 1 bis 4, dadurch gekennzeichnet, daß während des gesamten Aufheizvorganges bis zum Gießzeitpunkt der gemessene zeitliche Verlauf der Temperatur gespeichert wird, daß bei nachfolgenden Schmelzvorgängen der dann gemessene zeitliche Verlauf der Temperatur mit den gespeicherten Werten laufend bzw. abschnittsweise verglichen wird und daß bei Übereinstimmung (innerhalb vorgegebener Toleranzen) zwischen einem gespeicherten und einem gemessenen Verlauf der Gießzeitpunkt und/oder die Gießtemperatur in Abhängigkeit von den Gießdaten des gespeicherten Verlaufs gesteuert wird.

6. Verfahren nach einem oder mehreren der Ansprüche 1 bis 5, dadurch gekennzeichnet, daß die von der als Induktionsspule ausgebildeten Heizung aufgenommene elektrische Leistung gemessen wird und daß das auf das zweite Signal bezogene Kriterium für die Auslösung des Gießvorganges in Abhängigkeit von der gemessenen Leistung verändert wird.

7. Vorrichtung zur Steuerung des Schmelz- und Gießvorganges der Feingießtechnik, insbesondere der Dentaltechnik, insbesondere zur Durchführung des Verfahrens nach einem oder mehreren der Ansprüche 1 bis 6, mit einem Schmelztiegel, einer einstellbaren Heizeinrichtung, einem Temperaturfühler zur Messung der Temperatur des Schmelzgutes und mit einer Steuereinrichtung zur Auslösung des Gießvorganges, dadurch gekennzeichnet, daß die Steuereinrichtung ein erstes Signal erzeugt, das der zeitlichen Änderung $(d\vartheta/dt)$ der Temperatur des Schmelzgutes entspricht, daß eine Einrichtung vorgesehen ist, die aus dem ersten Signal das Erreichen der Liquidus-Temperatur des Schmelzgutes dadurch bestimmt, daß sich das erste Signal vergrößert, worauf die Einrichtung ein zweites Signal erzeugt, daß die Einrichtung weiterhin in Abhängigkeit von dem Auftreten des zweiten Signales eine Bezugsgröße

$(t_1; \vartheta_1)$ für eine weitere Einrichtung festsetzt, wobei die weitere Einrichtung ausgehend von der Bezugsgröße in Abhängigkeit von einem vorgegebenen Kriterium den Gießvorgang auslöst.

8. Vorrichtung nach Anspruch 7, dadurch gekennzeichnet, daß die weitere Einrichtung ein Zeitgeber ist, der von der ersten Einrichtung (Zeitpunkt $t_1$) gestartet wird und der nach Ablauf einer vorgegebenen Zeitdauer ($\Delta t$) den Gießvorgang auslöst.

9. Vorrichtung nach Anspruch 7 oder 8, dadurch gekennzeichnet, daß die weitere Eirichtung folgendes enthält: einen Bezugswertgeber, in welchem ein vorgegebener Wert ($\Delta\vartheta$) gespeichert ist, sowie einen Vergleicher, der die gemessene Temperatur des Schmelzgutes mit der Summe aus der von der ersten Einrichtung ermittelten Liquidus-Temperatur und dem Wert ($\Delta\vartheta$) des Bezugswertgebers vergleicht und bei Übereinstimmung beider Eingangsgrößen den Gießvorgang auslöst.

10. Vorrichtung nach einem oder mehreren der Ansprüche 7 bis 9, gekennzeichnet durch einen Speicher, der die gemessenen Istwerte des auf das zweite Signal bezogenen Auslösekriteriums ($\Delta\vartheta$ bwz. $\Delta t$) speichert und durch eine Ausleseeinrichtung, die bei nachfolgenden Schmelz- und Gießvorgängen die gespeicherten Istwerte aus dem Speicher ausliest und als Sollwert für die Auslösekriterien der Steuereinrichtung zuführt.

11. Vorrichtung nach einem oder mehreren der Ansprüche 7 bis 10, gekennzeichnet durch einen weiteren Speicher, in welchem die gemessenen Werte des zeitlichen Verlaufes der Temperatur gespeichert werden und durch eine Vergleichseinrichtung, die die gespeicherten Werte des zeitlichen Verlaufs mit den aktuell gemessenen Werten des zeitlichen Verlaufs der Temperatur vergleicht und bei Übereinstimmung zwischen den gemessenen Werten und einem gespeicherten Kurvenverlauf die weiteren Werte des gespeicherten Kurvenverlaufes als Sollwert für die Steuerung ausgibt.

12. Vorrichtung nach einem oder mehreren der Ansprüche 7 bis 11, gekennzeichnet durch eine Ausgabeeinrichtung, insbesondere einen Drucker, der die gemessenen Istwerte des zeitlichen Verlaufs der Temperatur sowie sonstige Parameter ausdruckt.

13. Vorrichtung nach einem oder mehreren der Ansprüche 7 bis 12, gekennzeichnet durch eine Einrichtung zur Messung der von der Induktionsspule aufgenommenen Leistung sowie durch eine Korrektureinrichtung, die die eingegebenen oder gespeicherten Werte für das Auslösekriterium des Gießvorganges ( $\Delta$ t bzw. $\Delta\vartheta$ ) in Abhängigkeit von dem Ausgangssignal der Leistungsmeßeinrichtung verändert.

Fig.1

**Fig. 2**

mit Oxydschicht

Heizung unterbrochen

$\vartheta_3$  H2

$\Delta\vartheta_2$ $\vartheta_4$  H1  8

H1

$\vartheta_2$  $\Delta\vartheta_1$  $\Delta\vartheta_2/2$  H2

$\vartheta_1$  $\vartheta_5$

ohne Oxydschicht

vorglühen  Ein

Ein

ohne vorglühen

t1  t1'  t2  t3  t3'  t4  t4'  t5

Fig. 3

0191350

Fig. 4

24 34 45 42 48 60 61
62
37
57
56
35
63
29
44
21
38
31
24
45
27
12
25
36
29
56
28
46
39
13
40
38
41
47
11
33
58
32

4/10

0191350

Fig. 5

**Fig. 6**

**Fig. 7**

Microprozessor  $\underline{92}$

93

220V~  24V  +

| Ausgänge | Ausgänge | Eingänge | Analog-/ Digital - Wandler |
|---|---|---|---|
| 96 | 95 | 94 | 97 |

← 63

99

80  60

98

+24V—

78  77  76  75  74

7/10

0191350

**Fig.8**

$\vartheta_s$ - Solidustemp.
$\vartheta_l$ - Liquidustemp.
$\vartheta_g$ = Gießtemp.

**Fig.9**

**Fig.10**

**Fig.11**